# EUROPEAN PATENT APPLICATION

(11) **EP 4 845 047 A1**
(43) Date of publication of application: **25.11.2026**
(21) Application number: 25732661.1
(22) Date of filing: 06.01.2025
(51) Int. Cl.: H04B 7/06, H04W 24/10, H04W 24/08, H04J 11/00, H04W 56/00, H04L 5/00

(54) **METHOD PERFORMED BY UE OR BASE STATION IN WIRELESS COMMUNICATION SYSTEM, AND APPARATUS THEREFOR**

(30) Priority: 15.01.2024 US 202463620883 P
(71) Applicant: LG ELECTRONICS, INC., Seoul 07336 (KR)
(72) Inventor: CHUNG, Jaehoon, Seocho-gu Seoul 06772 (KR); KANG, Jiwon, Seocho-gu Seoul 06772 (KR); GO, Seongwon, Seocho-gu Seoul 06772 (KR); KIM, Hyungtae, Seocho-gu Seoul 06772 (KR); KIM, Seonwook, Seocho-gu Seoul 06772 (KR)
(74) Representative: Frenkel, Matthias Alexander
(86) International application number: PCT/KR2025/000200
(87) International publication number: WO 2025/155014

(57) **Abstract**

A method performed by a user equipment (UE) according to at least one of the embodiments disclosed in the present disclosure includes: receiving configuration information including a plurality of physical cell identifiers (PCIs) related to inter-cell beam management (ICBM); performing first measurement based on a plurality of signals related to the plurality of PCIs; transmitting a first report related to preference/non-preference of the UE for each of the plurality of PCIs based on the first measurement; performing second measurement based on signals for preferred PCIs by excluding non-preferred PCIs among the plurality of PCIs; and based on that the second measurement satisfies a UE-initiated beam report condition, transmitting a second report for the second measurement.

## Description

### TECHNICAL FIELD

The present disclosure relates to a wireless communication system, and more specifically, to a method for a terminal or a base station to transmit or receive an uplink/downlink wireless signal in a wireless communication system and an apparatus therefor.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In the existing New Radio (NR) standard, it is defined that a base station (BS) provides configuration information on beam measurement/reporting to a user equipment (UE) for beam management. Such configuration information explicitly indicates beams that the UE needs to measure/report.

Depending on the channel environment, for example, in an environment where the UE has high mobility, the UE needs to frequently perform beam measurement reporting to find the optimal beam. In this case, issues such as reference signal overhead, UE measurement/reporting overhead, and increased power consumption arise.

### DISCLOSURE

### TECHNICAL PROBLEM

The present disclosure aims to provide a method for efficiently performing a wireless signal transmission and reception process and device therefor. For example, a method for more efficiently transmitting and receiving beam measurement reports between a user equipment (UE) and a base station (BS) through a UE-initiated measurement report and device therefor may be provided.

Other technical objects may be inferred from the detailed description.

### TECHNICAL SOLUTION

In an aspect of the present disclosure, provided herein is a method performed by a user equipment (UE). The method includes: receiving configuration information comprising a plurality of physical cell identifiers (PCIs) related to inter-cell beam management (ICBM); performing first measurement based on a plurality of signals related to the plurality of PCIs; transmitting a first report related to preference/non-preference of the UE for each of the plurality of PCIs based on the first measurement; performing second measurement based on signals for preferred PCIs by excluding non-preferred PCIs among the plurality of PCIs; and based on that the second measurement satisfies a UE-initiated beam report condition, transmitting a second report for the second measurement.

The second report may be a UE-initiated beam report for the ICBM.

A PCI subset may be configured based on the preferred PCIs of the UE. The PCI subset may be updated based on the second measurement reported through the second report.

The second report may include measurement values of up to N beams for each of the preferred PCIs.

The number of beams for each of the preferred PCIs may be determined differently depending on a preference level of each of the preferred PCIs.

M, which is the number of preferred PCIs, and N may be determined based on higher layer signaling.

M, which is the number of preferred PCIs, and N may be determined by the UE, and the second report may include information about at least one of M and N.

The second report may include information regarding whether timing advance (TA) measurement is performed for each of the preferred PCIs.

The UE-initiated beam report condition may include at least one of: the presence of a PCI having a higher beam quality than a beam quality of a PCI related to a control resource set (CORESET) pool index; and the presence of a PCI having a higher beam quality than a beam quality of a serving cell.

In another aspect of the present disclosure, provided herein is a non-transitory computer-readable recording medium having recorded thereon a program for executing the above-described method.

In another aspect of the present disclosure, provided herein is a device including: a memory configured to store instructions; and a processor configured to perform operations by executing the instructions. The operations may include: receiving configuration information comprising a plurality of PCIs related to ICBM; performing first measurement based on a plurality of signals related to the plurality of PCIs; transmitting a first report related to preference/non-preference of the device for each of the plurality of PCIs based on the first measurement; performing second measurement based on signals for preferred PCIs by excluding non-preferred PCIs among the plurality of PCIs; and based on that the second measurement satisfies a device-initiated beam report condition, transmitting a second report for the second measurement.

The device may further include a transceiver configured to transmit or receive wireless signals under control of the processor.

The device may be a UE in a wireless communication system.

The device may be a processing device configured to control a UE in a wireless communication system.

In another aspect of the present disclosure, provided herein is a method performed by at least one network node. The method includes: transmitting configuration information comprising a plurality of PCIs related to ICBM to a UE; transmitting a plurality of signals related to the plurality of PCIs; receiving a first measurement report related to preference/non-preference of the UE for each of the plurality of PCIs; transmitting signals for the preferred PCIs to the UE by excluding non-preferred PCIs among the plurality of PCIs; and based on that a UE-initiated beam report condition is satisfied at the UE, receiving a second measurement report for the signals for the preferred PCIs.

In a further aspect of the present disclosure, provided herein is at least one network node. The at least one network node includes: includes: at least one memory storing instructions; and at least one processor configured to perform operations by executing the instructions. The operations of the at least one network node include: transmitting configuration information comprising a plurality of PCIs related to ICBM to a UE; transmitting a plurality of signals related to the plurality of PCIs; receiving a first measurement report related to preference/non-preference of the UE for each of the plurality of PCIs; transmitting signals for the preferred PCIs to the UE by excluding non-preferred PCIs among the plurality of PCIs; and based on that a UE-initiated beam report condition is satisfied at the UE, receiving a second measurement report for the signals for the preferred PCIs.

### ADVANTAGEOUS EFFECTS

According to the disclosure, wireless signal transmission and reception can be efficiently performed in a wireless communication system. For example, a user equipment (UE) may provide information about preferred/non-preferred cells of the UE and information about related reference signal resource sets to a network through a UE-initiated inter-cell beam management (ICBM) beam report, thereby allowing the UE and network to operate more efficiently.

Other technical effects may be inferred from the detailed description.

### BRIEF DESCRIPTION OF THE DRAWINGS

FIG. 1 illustrates physical channels used in a 3rd generation partnership project (3GPP) system as an exemplary wireless communication system, and a general signal transmission method using the same.
FIG. 2 illustrates a radio frame structure.
FIG. 3 illustrates a resource grid of a slot.
FIG. 4 illustrates exemplary mapping of physical channels in a slot.
FIG. 5 illustrates an exemplary physical downlink shared channel (PDSCH) and ACK/NACK transmission and reception process.
FIG. 6 illustrates an exemplary physical uplink shared channel (PUSCH) transmission process.
FIG. 7 shows an example of a CSI related procedure.
FIGS. 8 and 9 each illustrate a beam measurement reporting procedure according to an embodiment.
FIG. 10 illustrates a flow of a method performed by a user equipment (UE) according to an embodiment.
FIG. 11 illustrates a flow of a method performed by at least one network node according to an embodiment.
FIGS. 12 to 15 illustrate an example of a communication system 1 and wireless devices applied to the disclosure.

### DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

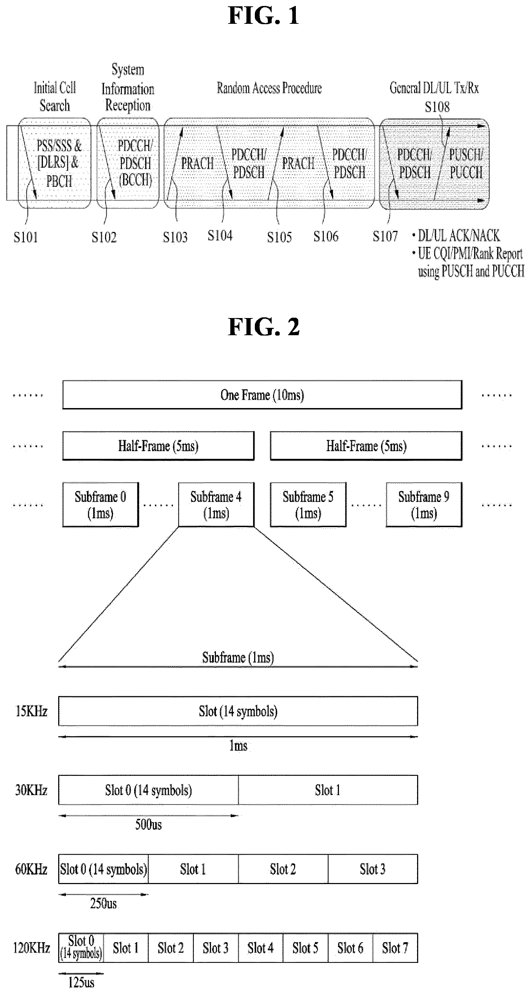

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: Number of symbols in a slot * N^{frame,u}ₛₗₒₜ: Number of slots in a frame * N^{subframe,u}ₛₗₒₜ: Number of slots in a subframe | | | |

Table 2 illustrates that the number of symbols per slot, the number of slots per frame, and the number of slots per subframe vary according to the SCS when the extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

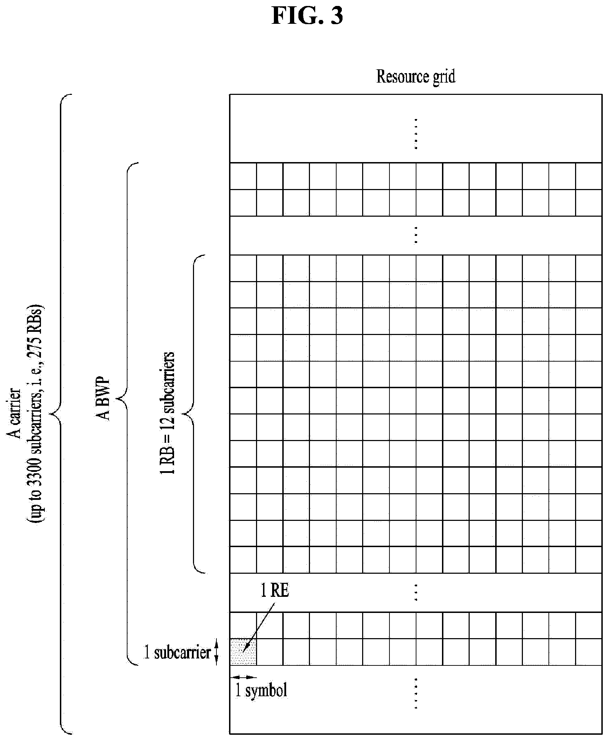

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

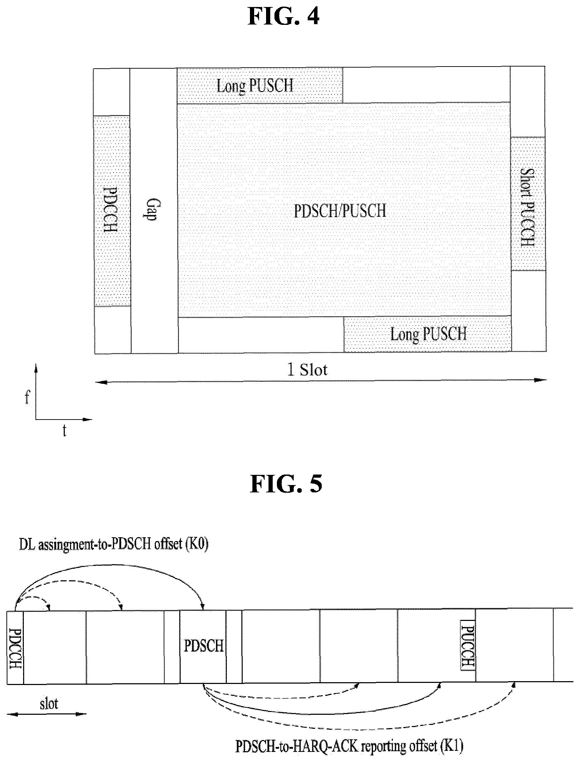

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.
- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.
   * An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

**[Table 3]**

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

**[Table 4]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.
- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

**[Table 5]**

| PUCCH format | Length in OFDM symbols | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.
- Frequency domain resource assignment: Indicates an RB set assigned to a PDSCH.
- Time domain resource assignment: Indicates K0 and the starting position (e.g., OFDM symbol index) and length (e.g., the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

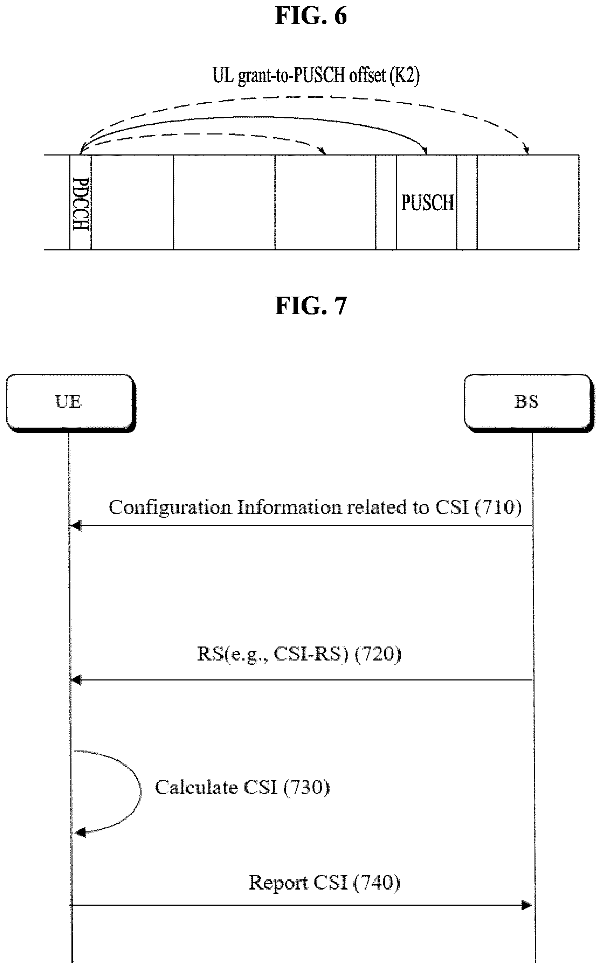

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

### CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.
- A CSI-IM resource may be configured for interference measurement (IM) of the UE. In the time domain, the CSI-IM resource set may be configured periodic, semipersistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semipersistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semipersistent or aperiodic. The periodic CSI report may be transmitted on a PUCCH. The semipersistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP(semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

### Beam Management (BM)

A BM procedure refers to Layer1/Layer2 (L1/L2) procedures for acquiring and maintaining a set of beams of a BS (e.g., gNB, TRP, etc.) and/or UE that is capable of being used for downlink (DL) and uplink (UL) transmission/reception. The BM procedure may include the following procedures and terms.
- Beam measurement: An operation in which the BS or UE measures the characteristics of a received beamforming signal.
- Beam determination: An operation in which the BS or UE selects the transmission/reception (Tx/Rx) beam thereof.
- Beam sweeping: An operation in which Tx and/or Rx beams are used to cover a spatial area over a specific time period in a predetermined manner.
- Beam report: An operation in which the UE reports information about a beamformed signal based on beam measurement.

The BM procedure may be divided into (1) a DL BM procedure using a synchronization signal)/physical broadcast channel (SS/PBCH) block or a CSI-RS, and (2) a UL BM procedure using a sounding reference signal (SRS).

Additionally, each BM procedure may include Tx beam sweeping to determine the Tx beam and Rx beam sweeping to determine the Rx beam.

### DL BM

The DL BM procedure may include transmission of beamformed DL RSs (e.g., CSI-RS or SS block (SSB)) by the BS and beam reporting by the UE.

Here, beam reporting may include preferred DL RS ID(s) and corresponding L1 reference signal received power (L1-RSRP)

The DL RS ID may be an SSB resource indicator (SSBRI) or CSI-RS resource indicator (CRI).

SSB beams and CSI-RS beams may be used for beam measurement. The measurement metric is L1-RSRP per resource/block. An SSB is used for coarse beam measurement, while a CSI-RS may be used for fine beam measurement. The SSB may be used for both Tx beam sweeping and Rx beam sweeping.

### (1) SSB beam

Rx beam sweeping based on an SSB may be performed across multiple SSB bursts. That is, Rx beam sweeping may be performed as the UE changes the Rx beam for the same SSBRI. Here, one SS burst includes one or more SSBs, and one SS burst set includes one or more SSB bursts.

Beam reporting based on an SSB is configured during a CSI/beam configuration in the RRC connected state (or RRC connected mode). The UE receives a CSI-ResourceConfig information element (IE), which includes CSI-SSB-ResourceSetList containing SSB resources used for BM, from the BS.

### (2) CSI-RS beam

The purpose of a CSI-RS will be described. i) If a repetition parameter is configured for a specific CSI-RS resource set and trs-Info is not configured, the CSI-RS is used for BM. ii) If the repetition parameter is not configured and trs-Info is configured, the CSI-RS is used for a tracking reference signal (TRS). iii) If neither the repetition parameter nor trs-Info is configured, the CSI-RS is used for CSI acquisition.

The repetition parameter may only be configured for CSI-RS resource sets that are associated with CSI-ReportConfig where reporting is set to L1 RSRP or 'No Report (or None)'.

If the UE is configured with CSI-ReportConfig where reportQuantity is set to 'cri-RSRP', 'cri-SINR', or 'none', and if CSI-ResourceConfig for channel measurement (higher layer parameter resourcesForChannelMeasurement) does not include the higher layer parameter 'trs-Info' and includes NZP-CSI-RS-ResourceSet where the higher layer parameter 'repetition' is configured, the UE may only be configured with the same number of ports (1-port or 2-port) for all CSI-RS resources within NZP-CSI-RS-ResourceSet, as indicated by the higher layer parameter 'nrofPorts'.

When the higher layer parameter repetition is set to 'ON', it is related to the Rx beam sweeping procedure of the UE. In this case, if the UE is configured with NZP-CSI-RS-ResourceSet where repetition is set to 'ON', the UE may assume that at least one CSI-RS resource within NZP-CSI-RS-ResourceSet is transmitted with the same DL spatial domain transmission filter. That is, the at least one CSI-RS resource within NZP-CSI-RS-ResourceSet is transmitted through the same Tx beam. Here, the at least one CSI-RS resource within the NZP-CSI-RS-ResourceSet may be transmitted in different OFDM symbols. Additionally, the UE is not expected to have different periodicities in periodicityAndOffset for all CSI-RS resources within NZP-CSI-RS-ResourceSet.

On the other hand, when repetition is set to 'OFF', it is related to the Tx beam sweeping procedure of the BS. In this case, when repetition is set to 'OFF', the UE does not assume that at least one CSI-RS resource within NZP-CSI-RS-ResourceSet is transmitted with the same DL spatial domain transmission filter. That is, the at least one CSI-RS resource within NZP-CSI-RS-ResourceSet is transmitted through different Tx beams.
- The UE receives an NZP CSI-RS resource set IE containing the higher layer parameter repetition from the BS via RRC signaling. Here, the repetition parameter is set to 'ON'.
- The UE receives CSI-RS resource(s) within a NZP CSI-RS resource set, where repetition is set to 'ON', repeatedly in different OFDM symbols through the same Tx beam (or DL spatial domain transmission filter) of the BS.
- The UE determines the Rx beam thereof.
- The UE omits a CSI report. In this case, reportQuantity in the CSI report configuration may be set to 'No report (or None)'.

That is, the UE may omit the CSI report when repetition is set to 'ON'.

### DL BM related beam indication

The UE may receive a list of up to M candidate transmission configuration indication (TCI) states for the purpose of at least quasi co-location (QCL) indication through an RRC configuration. Here, M may vary depending on the capability of the UE. For example, M may be 64.

Each TCI state may be configured with a single RS set. For at least the spatial QCL purpose (QCL Type D) within the RS set, each DL RS ID may refer to one of the DL RS types, such as an SSB, P-CSI RS, SP-CSI RS, or A-CSI RS.

The initialization/update of DL RS ID(s) within the RS set used for at least the spatial QCL purpose may be performed through at least explicit signaling.

### Rel-16/17 enhancement

In Rel-16, enhancements were made not only for beam/PL RS indication but also for beam reporting. In Rel-15, a mode in which the UE measures/reports L1-RSRP for each beam RS is supported. However, in environments with significant interference between beams, the high L1-RSRP (received signal strength) of a specific beam RS does not guarantee that the corresponding RS may have superior quality as the serving beam. In other words, the UE may select a beam with large received signal strength but also significant beam interference and report the beam to the BS. To overcome such a limitation, Rel-16 supports a new beam reporting mode where the BS configures not only an RS for channel measurement but also resources for interference measurement, and the UE measures the L1-SINR for both the channel and interference resources and reports a few RSs with high L1-SINR values.

In Rel-16, various BM enhancements were made. In particular, features that significantly reduce signaling overhead and latency related to beam indication methods were introduced. However, for a UE operating with a single serving beam, beams were not configured/indicated integrally across channels/RSs. Based on this motivation, methods for configuring/indicating beams integrally across channels/RS were standardized in Rel-17. In NR, DL beams are indicated through a transmit configuration indicator (TCI), which is referred to as a unified TCI state. While the existing TCI state is configured/indicated separately for each DL RS/channel, the unified TCI state is configured/indicated integrally. By default, a DL unified TCI state indicates a QCL type-D RS that is integrally applied to (some) PDCCHs, (some) PDSCHs, and (some) CSI-RS resources. A UL unified TCI state indicates a spatial relation RS (and PL RS) that is integrally applied to (some) PUCCHs, (some) PUSCHs, and (some) SRS resources. Additionally, similar to the default spatial relation/PL RS feature in Rel-16, a UL spatial relation and PL RS may be aligned with a DL beam RS for a UE where beam correspondence is established. Thus, channels/RS for which the unified TCI state is applied may encompass both DL and UL channels/RS. This is called a joint DL/UL TCI state. In other words, the following two modes are supported.
- Joint DL/UL TCI Configuration/Indication Mode: The DL RS configured/indicated as a joint TCI state is applied not only as a QCL type-D source RS for DL channels/RSs but also as a spatial relation RS (and PL RS) for UL channels/RSs. In other words, when the joint TCI state is updated and indicated, beam RSs (and PL RSs) for each of the corresponding DL channels/RSs and UL channels/RSs are changed together.
- Separate DL and UL TCI Configuration/Indication Mode: The QCL type-D source RS for DL channels/RSs is configured/indicated as a DL TCI state, while the spatial relation RS (and PL RS) for UL channels/RSs is configured/indicated as a UL TCI state. Here, the DL TCI state and UL TCI state are configured/indicated separately.

The DL/UL/joint TCI state is expected to be indicated/updated through a MAC-CE and/or DCI. More specifically, among multiple TCI states configured via RRC (referred to as a TCI state pool), one or more TCI states are activated through a MAC-CE. If multiple TCI states are activated via a MAC-CE, one of the TCI states is indicated through DCI. The DCI indication is expected to be supported through a DL DCI format (DCI1-1/1-2) that supports the TCI field, and the DCI indication may be supported not only when PDSCH scheduling is accompanied but also when the PDSCH scheduling is not accompanied. In the latter case, since the PDSCH scheduling is omitted (similar to DCI-based semi-persistent scheduling (SPS) release), the transmission of an ACK by the UE for the corresponding DCI may be supported.

The Rel-17 beam report mode may support a mode in which the UE measures/reports the optimal beam RS for each TRP in a MTRP environment. To this end, the BS may configure a beam measurement RS set/group into two subsets/sub-groups, and the UE may select RS(s) for each subset/sub-group and report the quality values (L1-RSRP, [L1-SINR]) of the corresponding RS(s).

### Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

In relation to the PDCCH/PDSCH QCL, a plurality of transmission configuration indication (TCI) states may be configured in the UE through higher layer signaling. Up to 64 TCI states may be RRC configured for the PDCCH QCL, and up to 128 TCI states may be RRC configured for the PDSCH QCL. In the case of PDSCH QCL, a list for configuring a plurality of TCI-states may be provided through a higher layer parameter PDSCH-Config.

Each TCI-state is related with one or two DL reference signals and a QCL configuration parameter between DM-RS ports of the PDSCH/PDSCH. The QCL configuration parameter may include qcl-Type1 for a first DL RS and qcl-Type2 for a second DL RS. A QCL type may correspond to one of the following:
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

TCI states configured through RRC signaling are deactivated by default.

In the case of PDSCH QCL, up to 8 TCI states from among RRC configured TCI states may be activated through a MAC CE. A TCI field included in DCI that schedules the PDSCH may indicate one of the activated TCI states (e.g., when provision of a TCI field to the corresponding DCI is activated by RRC signaling), and the UE may receive the PDSCH based on QCL information corresponding to the indicated TCI state.

In the case of PDCCH QCL, up to TCI state from among RRC configured TCI states may be activated for the corresponding CORESET through the MAC CE. To receive the PDCCH in the corresponding CORESET, the UE may receive the PDCCH based on QCL information corresponding to the activated TCI state.

### Multiple-transmission/reception point (M-TRP)-related operation

The M-TRP transmission method, in which M TRPs transmit data to one UE, is largely divided into two types: eMBB M-TRP transmission, which is a method to increase a transmission rate, and URLLC M-TRP transmission, which is a method to increase a reception success rate and reduce latency.

The DL M-TRP URLLC transmission method refers to a method in which multiple TPRs transmit the same data/DCI by using different space (e.g., layer/port)/time/frequency resource. For example, TRP 1 may transmit specific data/DCI on resource 1, and TRP 2 may transmit the specific data/DCI (i.e., the same data/DCI) on resource 2.

That is, when the DL M-TRP URLLC transmission method is configured, the UE may receive the same data/DCI by using different spaces/times/frequency resources. In this case, the UE may receive an instruction about a QCL RS/type (i.e., DL TCI state) used in the space/time/frequency resource for receiving the data/DCI, from a BS.

For example, when the corresponding data/DCI is received from resource 1 and resource 2, the UE may receive the instruction about the DL TCI state used in resource 1 and the DL TCI state used in resource 2, from the BS. High reliability may be obtained by receiving the corresponding data/DCI through resource 1 and resource 2. This M-TRP URLLC transmission method may be applied to PDSCH/PDCCH.

The UL M-TRP URLLC transmission method refers to a method in which multiple TRPs receive the same data/UCI from one UE by using different spaces/times/frequency resources. For example, TRP 1 may receive the same data/UCI from the UE on resource 1, and TRP 2 may receive the same data/UCI from the UE on resource 2. The TRP 1 and the TRP 2 may share data/UCI received from the UE through a backhaul link (connected between TRPs).

That is, when the UL M-TRP URLLC transmission method is configured, the UE may transmit the same data/DCI by using different spaces/times/frequency resources. In this case, the UE may receive an instruction about Tx beams and Tx power (i.e., UL TCI state) used in the space/time/frequency resource for transmitting the same data/DCI, from the BS. For example, when the same data/DCI is transmitted from resource 1 and resource 2, the UE may receive the instruction about the UL TCI state used in resource 1 and the UL TCI state used in resource 2, from the BS. This UL M-TRP URLLC may be applied to PUSCH/PUCCH.

In terms of DCI transmission, the M-TRP transmission method may be divided into i) a multiple DCI (M-DCI)-based M-TRP transmission method in which each TRP transmits different DCIs, and ii) a single-DCI (S-DCI)-based M-TRP transmission method in which one TRP transmits DCI. For example, in the case of S-DCI, all scheduling information about data transmitted by the M-TRP needs to be transmitted through one DCI, and thus may be used in an ideal backhaul (BH) environment in which dynamic cooperation between two TRPs is possible.

In relation to M-TRP transmission and reception in Rel-16 NR standardization, PDSCH transmission and reception according to the S-DCI-based M-TRP transmission method and the M-DCI-based M-TRP transmission method are supported.

First, the S-DCI-based M-TRP PDSCH transmission method will be described.

For S-DCI-based M-TRP PDSCH transmission, one of SDM/FDM/TDM methods may be used. In the case of SDM, the BS transmits one TB by using multi-layers, but transmits layers belonging to different DMRS CDM groups through different transmission beams (Tx beams) (i.e., QCL RS or TCI state). As such, transmission capacity may be improved by increasing the number of layers compared to the existing S-TRP transmission method. When one TB is transmitted using multiple layers, some layers may be transmitted to the TRP 1 and the other layers may be transmitted to the TRP 2, thereby improving channel reliability due to diversity gain.

For FDM, two schemes, schemes 2a and 2b, are supported. Here, the scheme 2a is a method of transmitting one TB to a multi-RB but transmitting RBs belonging to different RB groups by using different Tx beams (i.e., QCL RS or TCI state). The scheme 2b is a method of transmitting the same TB to different RB groups but transmitting RBs belonging to different RB groups by using different Tx beams (i.e., QCL RS or TCI state). For TDM, two schemes, schemes 3 and 4, are supported. Here, the scheme 4 (i.e., inter-slot TDM) is a method of transmitting the same TB repeatedly in multiple slots but transmitting slots belonging to different slot groups with different Tx beams (i.e., QCL RS or TCI state). In contrast, the scheme 3 (i.e., intra-slot TDM) is a method of repeatedly transmitting the same TB in several OFDM symbol groups but transmitting some OFDM symbol groups and the other OFDM symbol groups with different Tx beams (i.e., QCL RS or TCI state).

Hereinafter, the M-DCI-based M-TRP PDSCH transmission method will be described.

The M-DCI based MTRP PDSCH transmission is a method of scheduling and transmitting the PDSCH through DCI by each TRP. That is, the TRP 1 transmits PDSCH 1 through DCI 1, and TRP 2 transmits PDSCH 2 through DCI 2. When the PDSCH 1 and the PDSCH 2 overlap each other on the same frequency time resource, two PDSCHs are received for the same RE, thereby increasing resource efficiency and increasing transmission capacity. To this end, the concept of CORESET pool, which refers to a group of several CORESETs, is introduced. For example, the TRP 1 transmits a PDCCH through CORESET belonging to CORESET pool 0 and also transmits a PDSCH scheduled by the corresponding PDCCH. The TRP 2 transmits a PDCCH through CORESET belonging to CORESET pool 1 and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by the TRP 1, and the other PUCCH resources may be scheduled by the TRP 2. The UE may transmit independent PUSCH/PUCCH for each of the TRP 1 and the TRP 2.

The UE may recognize a PUSCH (or PUCCH) scheduled by the DCI received based on different CORESETs (or CORESETs belonging to different CORESET groups) as a PUSCH (or PUCCH) transmitted to different TRPs or as PUSCHs (or PUCCHs) of different TRPs. A method for UL transmission (e.g., PUSCH/PUCCH) transmitted to different TRPs may be equally applied to UL transmission to different panels belonging to the same TRP.

Hereinafter, a CORESET group ID (or COERSET pool index with the same meaning) may mean index/identification information (e.g., ID) to distinguish CORESETs for each TRP/panel. A CORESET group may mean a group/union of CORESETs distinguished by index/identification information (e.g., ID)/CORESET group ID, and the like to distinguish CORESETs for each TRP/panel. For example, the CORESET group ID may be specific index information defined within CORESET configuration. In other words, the CORESET group may be configured/indicated/defined by an index defined within the CORESET configuration for each CORESET. And/or, the CORESET group ID may mean an index/identification information/indicator, or the like for distinction/identification between CORESETs configured/related to each TRP/panel.

Hereinafter, the CORESET group ID may be replaced and expressed as a specific index/specific identification information/specific indicator for distinction/identification between CORESETs configured/related to each TRP/panel. The corresponding information may be configured/indicated through higher layer signaling (e.g., RRC signaling or MAC-CE) and/or physical layer signaling (e.g., DCI). For example, PDCCH detection for each TRP/panel may be configured/instructed to be performed on a CORESET group basis, and UCI (e.g., CSI, HARQ-ACK/NACK, or SR) for each TRP/panel and/or a UL physical channel resource (e.g., PUCCH/PRACH/SRS resources) may be configured/instructed to be managed/controlled separately on a CORESET group basis. And/or, HARQ ACK/NACK (process/retransmission) for PDSCH/PUSCH, or the like scheduled for each TRP/panel on a CORESET group basis may be managed.

For example, a higher layer parameter ControlResourceSet IE (information element) may include CORESET-related ID (e.g., controlResourceSetID)/CORESET pool index for CORESET (e.g., CORESETPoolIndex)/time/frequency resource configuration of CORESET/TCI information related to CORESET. For example, the index of the CORESET pool (e.g., CORESETPoolIndex) may be configured to 0 or 1. In the description described above in the disclosure, the CORESET group may correspond to the CORESET pool, and the CORESET group ID may correspond to the CORESET pool index (e.g., CORESETPoolIndex).

With regard to M-TRP transmission and reception in Rel-17 NR standardization, M-TRP PDCCH/PDSCH SFN transmission, S-DCI-based M-TRP PUSCH repeated transmission, and single PUCCH resource-based M-TRP PUCCH repeated transmission are supported. In the corresponding transmission schemes, the same content (i.e., DCI/UL TB/UCI) is transmitted repeatedly by improving the URLLC target to increase reliability. Here, the M-TRP PDCCH repeated transmission is performed based on TDM or FDM, the M-TRP PDCCH/PDSCH SFN transmission is performed in the same time/frequency/layer, the S-DCI-based M-TRP PUSCH repeated transmission is performed based on TDM, and the single PUCCH resource-based M-TRP PUCCH repeated transmission is performed based on TDM.

First, the S-DCI-based M-TRP PDCCH repeated transmission method will be described.

In NR Rel-17 standardization, a plurality of CORESETs with different TCI states (i.e., different QCL RSs) are configured for the UE for M-TRP PDCCH repeated transmission, and a plurality of search space (SS) set that are each connected to the corresponding CORESETs are configured. The BS may instruct/configure to the UE that the SS set connected to one CORESET and the SS set connected to another CORESET are linked with each other for repeated transmission. As such, the UE may know that PDCCH candidates of the corresponding SS set are transmitted repeatedly.

For example, two CORESETs, CORESET 0 and CORESET 1, may be configured to the UE, CORESET 0 and CORESET 1 may be connected to SS set 0 and SS set 1, respectively, and SS set 0 and SS set 1 may be linked with each other. The UE may know that the same DCI is transmitted repeatedly in the PDCCH candidate of SS set 0 and the PDCCH candidate of SS set 1 and know that, based on a specific rule, a specific PDCCH candidate of SS set 0 and a specific PDCCH candidate of SS set 1 are a pair configured to repeatedly transmit the same DCI. The corresponding two PDCCH candidates are referred to as linked PDCCH candidates, and the UE may successfully decode the corresponding DCI when properly receiving either of the two PDCCH candidates. However, the UE may use the QCL RS (i.e., DL beam) of the TCI state of COERSET 0 connected to SS set 0 when receiving the PDCCH candidate of SS set 0 and use the QCL RS (i.e., DL beam) of the TCI state of COERSET 1 connected to SS set 1 when receiving the PDCCH candidate of SS set 1. Accordingly, the UE receives the associated PDCCH candidates by using different beams.

Hereinafter, the M-TRP SFN PDCCH/PDSCH transmission method will be described.

As one of M-TRP PDCCH repeated transmission types, multiple TRPs may repeatedly transmit the same DCI through the same time/frequency/DMRS port, and this transmission method may be referred to as SFN PDCCH transmission. However, for SFN PDCCH transmission, the BS configures a plurality of TCI states in one CORESET instead of configuring a plurality of CORESETs configured with different TCI states. When receiving a PDCCH candidate through an SS set connected to one corresponding CORESET, the UE may perform channel estimation of the PDCCH DMRS by using all of the corresponding plurality of TCI states and attempt decoding.

When repeatedly transmitting the M-TRP PDSCH described above, the two TRPs repeatedly transmit the corresponding channel on different resources. However, when the resources used by the two TRPs are the same, that is, when the same channel is repeatedly transmitted through the same frequency/time/layer (i.e., DMRS port), the reliability of the corresponding channel may be improved. In this case, the resources of the same channel that are repeatedly transmitted are not differentiated and are received together during transmission (i.e., air), and thus may be recognized as one channel (e.g., composite channel) in terms of a receiving end (e.g., UE). For SFN PDSCH transmission, two DL TCI states for PDSCH DMRS reception may be configured to the UE.

Hereinafter, the S-DCI-based M-TRP PUSCH repeated transmission method will be described.

In NR Rel-17 standardization, the BS configures two SRS sets to the UE for S-DCI-based M-TRP PUSCH transmission, and each set is used to indicate a UL Tx port for the TRP 1 and the TRP 2, a UL beam/QCL information. The BS may perform SRS resource indication for each SRS resource set through two SRI fields included in one DCI and indicate up to two PC parameter sets. For example, a first SRI field may indicate the SRS resource and PC parameter set defined in SRS resource set 0, and a second SRI field may indicate the SRS resource and PC parameter set defined in SRS resource set 1. The UE may receive instructions about a UL Tx port, a PC parameter set, and a UL beam/QCL information for the TRP 1 through the first SRI field, and therethrough, the corresponding UE performs PUSCH transmission in TO corresponding to SRS resource set 0. Similarly, the UE may receive instructions about a UL Tx port, a PC parameter set, and a UL beam/QCL information for the TRP 2 through the second SRI field, and therethrough, the corresponding UE performs PUSCH transmission in TO corresponding to SRS resource set 1. In addition to the SRI field, the existing one field is expanded into two fields to indicate TPMI, PTRS, and TPC fields for each TRP. STRP PUSCH repeated transmission may be performed by introducing a 2-bit SRS resource set indication field and selecting a specific one of two SRS sets, and MTRP PUSCH repeated transmission may be performed by selecting both. That is, when the corresponding field is 00 and 01, STRP PUSCH transmission corresponding to each set is performed by indicating SRS set 0 and SRS set 1, respectively, and when the corresponding field is 10, MTRP PUSCH transmission is performed in the order, in which a set pair is indicated, by indicating (SRS set 0, SRS set 1). That is, set 0 corresponds to first PUSCH TO. When the field is 11, MTRP PUSCH transmission is performed in the order, in which the set pair is indicated, by indicating (SRS set 1, SRS set 0). That is, set 1 corresponds to first PUSCH TO.

Hereinafter, a single PUCCH resource-based M-TRP PUCCH repeated transmission method will be described.

In NR Rel-17 standardization, for single PUCCH resource-based M-TRP PUCCH transmission, the BS may activate/configure, to the UE, two spatial relation info to a single PUCCH resource (in the case of FR1, two PC parameter sets are activated/configured). When UL UCI is transmitted through a corresponding PUCCH resource, each spatial relation info is used to indicate, to the UE, spatial relation info towards each of the TRP 1 and the TRP 2. For example, through a value indicated in the first spatial relation info, the UE is instructed to Tx beam/PC parameter(s) toward the TRP 1, and the UE performs PUCCH transmission in the TO corresponding to the TRP 1 by using the corresponding information. Similarly, through the value indicated in the second spatial relation info, the UE is instructed to Tx beam/PC parameter(s) toward the TRP 2, and the UE performs PUCCH transmission in the TO corresponding to the TRP 2 by using the corresponding information.

For M-TRP PUCCH repeated transmission, a configuration method is improved to configure two spatial relation inf in the PUCCH resource. That is, when a power control (PC) parameter such as PLRS, Alpha, P0, and closed loop index is configured in each spatial relation info, the spatial relation RS may be configured. As a result, PC information and spatial relation RS information corresponding to two TRPs may be configured through two spatial relation info. Therethrough, the UE transmits UCI (i.e., CSI, ACK/NACK, or SR) PUCCH by using the first spatial relation info in the first TO, and transmits the same UCI PUCCH by using the second spatial relation info in the second TO. In the disclosure, a PUCCH resource configured with two spatial relation info is referred to as an M-TRP PUCCH resource, and a PUCCH resource configured with one spatial relation info is referred to as an S-TRP PUCCH resource.

### Transmission configuration indication (TCI) state/beam indication

In description of the inventive concept, when receiving/transmitting data/DCI/UCI through a specific space/time/frequency resource, using (or mapping) a specific TCI state (or TCI) means that, in the case of DL, a channel is estimated from DMRS by using a QCL type and QCL RS indicated by a specific TCI state in a specific space/time/frequency resource, and data/DCI/UCI is received/demodulated through the estimated channel.

When data/DCI/UCI is received/transmitted through a specific space/time/frequency resource, using (or mapping) a specific TCI state (or TCI) means that, in the case of UL, DMRS and data/UCI is transmitted/modulated using Tx beams and/or Tx power indicated by a specific TCI state in a specific space/time/frequency resource.

The UL TCI state may include Tx beam or Tx power information of the UE. The BS may configure spatial relation info or the like to the UE through other parameters instead of the TCI state.

For example, the UL TCI state may be directly indicated to the UE through UL grant DCI. Alternatively, the UL TCI state may mean the spatial relationship info of an SRS resource indicated through an SRS resource indicator (SRI) field of the UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (set of up to 32 parameter values per cell), or q_d (index of DL RS resource for path loss (PL) measurement) (up to 4 measurements per cell), or/and I (closed loop power control process index (up to 2 processes per cell)).

For convenience of description of the inventive concept, it is assumed that 2 TRPs cooperate with each other to perform transmission/reception operations, but the inventive concept is not limited thereto. In other words, the inventive concept may be expanded and applied in an environment with multiple TRPs of 3 or more, and may also be expanded and applied in an environment in which the same TRP performs transmission/reception through different panels or beams. The UE may recognize different TRPs as different TCI states. When the UE transmits and receives data/DCI/UCI by using TCI state 1, it means that data/DCI/UCI is transmitted and received from the TRP 1 (or to TRP 1).

Transmission occasion (TO) refers to each channel transmitted at different times when multiple channels are TDMed, refers to each channel transmitted in different frequencies/RBs when multiple channels are FDMed, and refers to each channel transmitted at different layers/beams/DMRS ports when multiple channels are SDMed. One TCI state may be mapped to each TO. When the same channel is transmitted repeatedly, complete data/DCI/UCI is transmitted to one TO, and a receiving end may receive multiple TOs to increase a reception success rate.

### Single DCI based multi-TB PUSCH/PDSCH scheduling

In Rel.17 NR, a method in which one DCI simultaneously schedules multiple PUSCH/PDSCH in an ultra-high frequency band (beyond 5.26 GHz) is supported. For example, multiple TDRAs (=TO) may be indicated at once through a TDRA field of the PUSCH scheduling DCI, and different TBs for each TO are transmitted through the PUSCH. The FDRA, MCS, TPMI, and SRI values of the corresponding DCI are commonly applied to multiple scheduled TBs. NDI and RV for each TB are individually indicated through the corresponding DCI, and HARQ number indicates one value but increases sequentially in TO order based on the initial TO.

### Simultaneous transmission across multiple panels (STxMP)

Recently, for Rel. 18 NR standardization, a method for the UE to simultaneously transmit multiple channels/RSs of the same type or multiple channels/RSs of different types simultaneously has been discussed. In the case of existing UEs, an operation of transmitting multiple channels/RS at a time is limited (e.g., it is possible to simultaneously transmit multiple SRS resources of different SRS sets for UL beam measurement, but it is impossible to transmit multiple PUSCHs simultaneously), but in the case of advanced UEs in the future, this limit may be alleviated and multiple channels or RSs may be transmitted simultaneously using multiple transmission panels, and in this case, such UEs are called STxMP UEs. For example, two PUSCHs corresponding to two UL TBs are scheduled on the same RE, and for transmission of PUSCHs 1 and 2, spatial relation RS 1 and PC parameter Set 1 (i.e., UL TCI state 1), and Spatial relation RS 2 and PC parameter Set 2 (i.e., UL TCI state 2) are configured, respectively. The UE transmits PUSCH 1 by using panel 1 corresponding to UL TCI state 1 and simultaneously transmits PUSCH 2 by using panel 2 corresponding to UL TCI state 2.

When the BS performs PUSCH scheduling through DCI, the BS may indicate whether to transmit the PUSCH through STxMP, through a single panel, or through MTRP PUSCH repetition. The corresponding UE needs to have STxMP capability and an STxMP mode needs to be enabled previously through RRC signaling or the like. To this end, the existing SRS resource set indication field may be redefined and used, or a new DCI field may be introduced.

### UE-initiated beam report for inter-cell beam management/MTRP

For a UE-initiated beam report considering inter-cell BM (ICBM) and inter-cell MTRP, UE/network operations and required events are proposed.

In the following explanation, the term "beam" may refer to a source RS for "spatial filter" or "spatial relation," and the term "beam" may be interpreted as a QCL (type-D) RS, a (DL/UL/joint) TCI state, or a spatial relation RS (in the case of UL). Beam measurement refers to the measurement of signals (e.g., RSs) transmitted and received through the corresponding beam/beamforming. Additionally, for convenience, a cell with a specific physical cell ID (PCI) may be referred to simply as a PCI.

In NR, BM is defined for beam measurement/reporting and beam activation/indication by the BS. For example, the beam measurement/reporting of the UE may be configured/indicated by the BS, and the BS may perform beam activation and beam indication to the UE based on the beam measurement/reporting of the UE.

In NR Rel-17, a beam measurement report for inter-cell beam management (ICBM) and inter-cell MTRP operations has been agreed upon as shown in Table 6.

**[Table 6]**

| |
|---|
| Regarding Rel-17 multi-beam measurement/reporting enhancements for L1/L2-centric inter-cell mobility and inter-cell mTRP: |
| - The quality of up to Kmax beams associated with the non-serving cell may be reported in a single CSI reporting instance. |
| - For each beam, the UE may report at least (1) a measured RS identifier and (2) a beam metric associated with the measured RS identifier. |
| - In a single reporting instance, depending on the network configuration, beams associated with the non-serving cell may be mixed with beams associated with the serving cell. |
| - A minimum of K=4 is supported, where K is defined as the number of beams associated with the non-serving cell reported in a single CSI reporting instance. |
| - The maximum value of K, denoted as Kmax, is determined by the UE capability. |
| - K is configured by the network according to the UE capability. |
| - For K > 4, the maximum number of beams associated with a single cell is 4. |
| *Note: The above is applied even if beam metrics other than L1-RSRP are supported. |
| For Rel-17 beam indication enhancements for ICBM, supported Rel-17 MAC-CE-based and/or DCI-based beam indication (at least using DCI format 1_1/1_2 with or without DL assignment including activation of a related MAC-CE-based TCI state) is: |
| - Applied to both joint TCI and separate DL/UL TCI, |
| - Both MAC-CE-based and MAC-CE+DCI-based beam indication methods are supported. |
| Regarding Rel-17 enhancements for ICBM and inter-cell mTRP: |
| - L1-RSRP reporting reuses the Rel-15 L1-RSRP table. |
| - N_{MAX} (the maximum number of PCIs that are RRC-configured differently from the serving cell for measurement/reporting) may vary depending on the UE capability, and candidate values thereof include at least 1 and X. |
| - When N_{MAX} is set to X, the UE may be RRC-configured to measure L1-RSRP for up to X PCIs, which are different from the serving cell PCI. |
| - In a single L1-RSRP reporting instance, the Rel-15 L1-RSRP reporting format is reused for all SSBRI-RSRP pairs. That is, for K > 1, (K-1) 4-bit differential L1-RSRP values are calculated for the reference (absolute) 7-bit L1-RSRP. |
| - CSI-SSB-ResourceSet configured for L1-RSRP measurement/reporting includes at least one SSB index set associated with each PCI index. The PCI index refers to a PCI within a PCI set configured for ICBM or inter-cell multi-TRP. |

Based on Table 6, beam measurement/reporting for supporting ICBM may be summarized as follows:

### Multi-beam Measurement Reporting for L1/L2-centric ICBM/MTRP

### (1) Measurement RS

1) An SSB is supported, and L1-RSRP is used as the reporting quantity.
2) CSI-SSB-ResourceSet configured for L1-RSRP measurement/reporting includes at least one set of SSB index values.
   i. The set of SSB indices is associated with PCI indices.
   ii. Additional information (additionalInfo) associated with SSB(s) different from PCI(s) of the serving cell may also be applied to ICBM.
3) Nₘₐₓ (the number of PCIs configured differently from the serving cell for measurement/reporting) is the UE capability, and candidate values include 1 to 7.
   i. When Nₘₐₓ is set to X, L1-RSRP measurement for up to X PCIs, different from the PCI of the serving cell, may be configured by RRC for the UE.

### (2) Reporting Content

1) The quality and measured RS identifiers of up to 4 beams.
2) In a single reporting instance, beams associated with the non-serving cell may be mixed with beams associated with the serving cell.
3) L1-RSRP reporting reuses the Rel-15 L1-RSRP table/format.

On the other hand, the issues in the current ICBM beam measurement/reporting process are as follows. In environments where the UE movement is significant or there is significant movement of objects around the UE, frequent beam measurement/reporting is required to find the optimal beam. This leads to problems such as: RS overhead, power consumption for transmitting RSs from the perspective of the BS, and increases in implementation burden and power consumption for the UE measurement/reporting.

As explained above, since the UE needs to measure measurement RSs of non-serving cell(s) based on the Nₘₐₓ value configured by RRC, the power consumption of the UE may increase depending on the number of measurement RSs. Additionally/ alternatively, depending on the BS configuration, the UE may be required to measure RSs for PCI(s) that have little impact on the UE in terms of signal strength or channel characteristics, which depend on the distance from the cell/TRP. This may further increase the power consumption of the UE. Additionally, when the measurement RS configuration includes multiple RSs, not only does the size of information (e.g., CRI/SSBRI field) for reporting the RS(s) actually measured by the UE increase, but such a large-sized field is also fixed according to the measurement RS configuration, resulting in overhead.

In the Rel-17 ICBM standardization, an operation of activating/deactivating a subset of non-serving cell SSBs to be measured via a MAC-CE was not introduced. Even if such an operation is introduced, additional MAC-CE signaling may be required, and as a result, the issue of signaling overhead may still remain.

In the Rel-19 standardization discussions, it was agreed to standardize the following content in order to introduce a process where a beam report is triggered by the UE based on changes in beam quality, rather than beam measurement/reporting configured/indicated by the BS, and beam indication is performed accordingly.

*To reduce overhead and*/*or latency, UE-initiated*/*event-based BM is defined. The use of unified TCI is assumed, while the framework of existing CSI measurement reporting configurations is leveraged, targeting FR2 and intra-cell*/*inter-cell STRP.*
- *UL signaling content for UE-initiated*/*event-based beam reporting for rapid beam switching*
- *UL signaling means*/*container considering UE-initiated*/*event-driven characteristics of UE transmission designed primarily for beam reporting*

The currently supported NR beam measurement/reporting is performed based on the configuration/indication of the BS. In particular, for ICBM, the number of RSs the UE needs to measure increases with the number of non-serving cells configured. This leads to an increase in UE power consumption and an increase in BS power consumption as RSs are transmitted in a preconfigured manner.

Therefore, according to an embodiment, instead of the UE performing (ICBM) beam measurement/reporting based on targets and methods preconfigured by the network as in the prior art, the UE may autonomously determine whether the quality of measurement beams corresponding to different PCI(s) is degraded or that beam switching is needed. In this case, the UE may initiate the (ICBM) beam report. Additionally/alternatively, for the (ICBM) beam report, the UE may autonomously select the PCI(s), thereby effectively determining candidate measurement RSs.

For example, the present disclosure proposes a method of configuring an event that triggers a UE-initiated beam report and reporting contents and/or a method by which a UE selects a measurement RS (subsequently) based on the indication of candidates of the measurement RS associated with (serving/non-serving) PCIs.

According to the embodiments described below, when the UE reports information on preferred/non-preferred PCIs and related resource sets to the network, the network may turn off a corresponding measurement RS/cell. In this case, turning off a non-preferred RS/cell is effective in terms of network energy saving. In addition, when some PCIs/RS sets are turned off in this way, the number of RS candidates is reduced, which may reduce the feedback overhead of an indication field (e.g., CRI/SSBRI field) for the RS included in the beam report.

### Proposal 1

According to an embodiment, proposed is a method in which the UE (dynamically) indicates/reports to the network a preferred or non-preferred PCI and/or measurement RS set(s)/configuration(s) associated with the PCI through a UE-initiated ICBM beam report.
(1) Option 1: A method based on up to K beam information (quality values) included in an ICBM beam report and RS IDs associated with a PCI

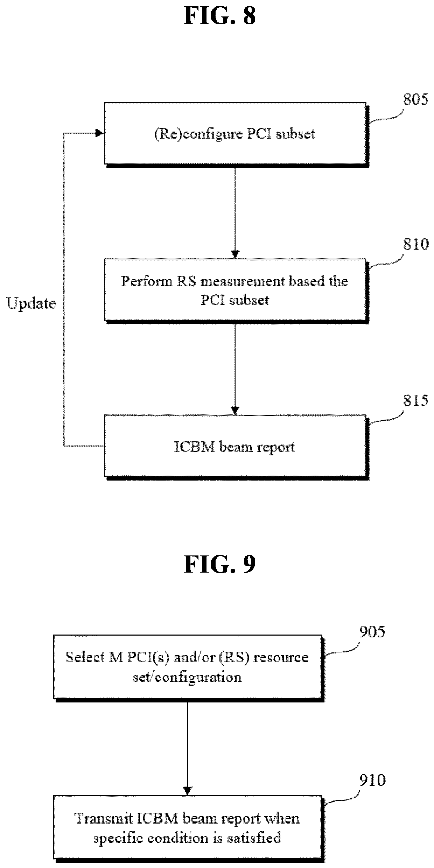

FIG. 8 illustrates exemplary UE operations based on Option 1.
1) First, the UE may configure a subset of PCIs with PCI(s) corresponding to the report quantity (805). The UE may perform subsequent RS measurement by selecting only RS(s) corresponding to the PCI(s) included in the PCI subset among all preconfigured measurement RSs or by including the RS(s) (810). For example, the configuration of the PCI subset may be determined through a single or multiple reporting instance(s).
2) If RS(s) targeted for the subsequent RS measurement in 1) satisfy a 'specific condition', the UE may perform the UE-initiated ICBM beam report (815). During the ICBM beam report process, the PCI subset may be changed/updated. For example, the measurement RSs subject to the beam report quantity configuration may be all preconfigured measurement RSs or RS(s) corresponding to PCI(s) not included in the current PCI subset.

(2) Option 2: For example, a method in which the UE selects and/or reports/indicates PCI(s) and configures beam(s) corresponding to the PCI(s) as the report quantity

FIG. 9 illustrates exemplary UE operations based on Option 2.

For all preconfigured measurement RSs, the UE may autonomously select M (optimal) PCI(s) (905). Additionally/alternatively, a resource set or resource configuration corresponding to the selected M PCIs may be selected, and the report quantity may be configured based on RS IDs corresponding to up to N beam quality values per PCI.

Example 1) The configuration of the report quantity when the total number of PCIs is 4: {PCI#0, PCI#1, PCI#2, PCI#3}
- Selected 2 PCIs: {PCI#0, PCI#1}
- 4 CRIs/SSBRIs of 'PCI#0' and corresponding beam quality values (L1-RSRP/L1-SINR)
- 4 CRIs/SSBRIs of 'PCI#1' and corresponding beam quality values (L1-RSRP/L1-SINR)

Example 2) The configuration of the report quantity when there are a total of 4 resource sets or resource configurations: {RS_set#0, RS_set#1, RS_set#2, RS_set#3}
- 2 resource sets (or configurations) corresponding to the selected PCIs: {RS_set#0, RS_set#1}
- 4 CRIs/SSBRIs of 'RS_set#0' and corresponding beam quality values (L1-RSRP/L1-SINR)
- 4 CRIs/SSBRIs of 'RS_set#1' and corresponding beam quality values (L1-RSRP/L1-SINR)

In this case, the measurement RSs corresponding to the PCI(s) included in the report and/or the resource set(s)/configuration(s) may be utilized for the subsequent RS measurement.

If the measurement RSs corresponding to the selected M PCI(s) and/or the RS(s) of the resource set(s) satisfy the 'specific condition', the UE may perform the UE-initiated ICBM beam report as described above (910).

For example, the M and N values may be indicated by a configuration from the BS. Alternatively, after the maximum values of M and N are configured or determined by the UE capability, and the actual M and N values applied to each report instance may be selected and reported by the UE. In this case, the applied M and N values may be included as the report contents.

As the 'specific condition' for the ICBM beam report, one or more of the following examples may be considered.
Example 1) When the quality value of the best beam of a serving cell PCI and/or the magnitude (and/or average value) of up to K beam quality values is less than or equal to a specific threshold
Example 2) When the quality value of the best beam of a non-serving cell PCI and/or the magnitude (and/or average value) of up to K beam quality values is more than or equal to that of a specific beam of the serving cell PCI (which may be the serving beam or the best beam and/or the average value of up to N beam quality values corresponding to the PCI)
Example 3) When the up to K quality values corresponding to the latest ICBM beam report are less than or equal to a specific threshold

In this case, the threshold may be applied uniformly to up to K beams, or it may be applied differently depending on the quality values from the best beam to the K-th beam. The threshold may be configured by the BS, and if the UE changes/indicates the threshold, corresponding information may be included as the report contents.

In this case, information on the preferred/non-preferred PCIs/RS sets of the UE may be encoded and reported together with the CSI/beam report or may be reported through a separate report.

Proposal 1 is a method for addressing the issue arising from performing RS measurement based on a resource configuration preconfigured for the ICBM beam report. The UE may configure a subset of PCIs as the beam report and reduce the candidates for subsequent RS measurement based thereon. In addition, when the beam quality values corresponding to the PCI subset meet a specific condition, the UE may determine that it is necessary to change the PCI subset and perform the UE-initiated ICBM beam report, thereby changing/updating the PCI subset. As a result, the BS may turn off the preferred/non-preferred PCIs and related RS sets, or the size of the indication field for reporting RSs in the beam report may be reduced based on the measurement RS candidates reduced through this operation.

Option 1 is a method based on up to K beam quality values included in the conventional ICBM beam report and RS IDs associated with each PCI.

Option 2 is a method for a case where reporting of the best N beams per TRP is supported for TRP(s) with different PCI(s). In this case, separate report configurations for each TRP and resource configurations for RSs with different PCIs are required. From this perspective, the UE may perform a report of N beams for the best M TRPs/PCIs in a UE-initiated beam report. For example, the UE may select and report M TRPs/PCIs, and accordingly, an RS set or resource configuration to be reported may be selected and reported. In addition, when the ICBM beam report is triggered based on the 'specific condition', detailed embodiments for the following scenarios may be considered.

### 1) Inter-cell M-DCI based MTRP

When there are beam quality values associated with one or more PCI(s) better than the (best/average) beam quality values associated with PCI(s) corresponding to a specific CORESET pool index among multiple CORESET pools configured for TRP differentiation purposes, the UE may trigger the ICBM beam report.

### 2) Rel-18 L1/L2 triggered mobility (i.e., LTM)

Instead of performing handover (HO) based on L3 measurement as in the prior art, the UE may perform L1 measurement for the serving cell/non-serving cell(s) and report the results, and based on the results, HO may be performed through a cell switch command (CSC) via a MAC-CE.

When there are beam quality values associated with one or more PCI(s) better than the (best/average) beam quality values associated with the current serving cell, the UE may trigger the ICBM beam report.

In this case, the UE may measure timing advance(s) (TA(s)) associated with candidate cell PCI(s) to be reported in UE-based TA measurement.

In Rel-18 LTM, for UE-based TA measurement, whether the UE performs TA measurement on a specific cell and/or a related DL RS among configured candidate cells depends on UE implementation. Therefore, after the BS indicates a CSC, if a TA corresponding to the target cell is inaccurate, it is necessary to indicate the RACH triggering operation along with the CSC.

When the UE performs measurement of TA(s) associated with candidate cell PCI(s) to be reported as described above, the UE is measuring the TA(s) for the PCI(s) included in the ICBM beam report, and thus, the UE may omit RACH triggering following the CSC, which provides an advantage in terms of reducing signaling/delay overhead.

As part of confidence information for the TA measurement of the UE, a 1-bit indicator may be included in the ICBM beam report contents, which may indicate whether the TA measurement is performed (i.e., when the indicator value is 1) and/or be used by the BS to determine whether RACH triggering needs to be initiated for the UE.

For two-part encoding, this may be part 1 CSI information, or a per-PCI indicator may also be included in part 2 CSI to indicate whether TA measurement is performed for each PCI.

Since there is a UE that supports different operation scenarios simultaneously, the events corresponding to the different scenarios may coexist.

As in the operation of Proposal 1, the UE may perform RS measurement and reporting based on some PCI subset(s)/RS set(s), and based thereon, the BS may determine to transmit or not transmit RSs corresponding to or not corresponding to the information. Alternatively, contrary to the configuration/indication of the PCI subset(S)/RS set(s) by the UE, the BS may indicate the PCI subset(s)/RS set(s) via signaling (MAC-CE and/or DCI) and transmit or not transmit the RSs under its own control. From the perspective of network (NW) energy saving, such an operation may allow specific BS(s) to reduce power consumption for RS transmission based on their needs.

In this case, through the PCI subset(s)/RS set(s) indicated by the signaling, the UE and the BS may identify the RSs corresponding to or not corresponding to specific PCI(s)/RS set(s) based on the preconfigured RS configuration and report configuration. To indicate RS IDs in subsequent RS measurement/reporting, the UE may use a codepoint corresponding to the reduced RS subset(s) resulting from the above operation, instead of using a CRI/SSBRI based on all the RSs.

For example, if the number of measurement RSs configured by RRC is 4 (i.e., CRI bits = 2 and corresponding RS IDs = RS#0, RS#1, RS#2, RS#3), and the BS indicates through signaling that reporting is not required for RS#1 and RS#2, the actual number of RSs used for measurement becomes 2 (i.e., RS#0, RS#3), and the number of CRI bits used for indication may be changed from the original 2 bits to 1 bit when configuring the beam report contents. In this case, CRI = 0 may correspond to RS#0 and CRI = 1 may correspond to RS#3. Alternatively, in the above example, subsets for operations may be predefined (e.g., set#0 = {RS#0, RS#1, RS#2, RS#3} / set#1 = {RS#0, RS#3} / set#2 = {RS#0, RS#1, RS#2}), and the set index may be indicated by a MAC-CE and/or DCI to signal a candidate set for measurement RSs.

### Proposal 1-1

Proposed is a method for configuring a report quantity based on the beam report size for configuring the PCI subset in Proposal 1 and/or the number of given beams.
Option 1) Configuring the value of Kₘₐₓ to a value greater than 4 in the prior art (e.g., 6 or 8)

Option 1 may operate in the same manner as the current ICBM beam report, but Option 1 may be used in configuring the PCI subset by increasing the Kₘₐₓ value.

Option 2) For a given value of Kₘₐₓ, the beam quality values to be reported as the quantity are determined as follows.

[The number of PCIs N1] × [The number of beams to be reported per PCI N2] = Kₘₐₓ

Example) When Kₘₐₓ = 4, {N1, N2} may be configured as {1,4}, {2,2}, or {4,1}.

For example, since the current operation depends on the magnitude of the L1-RSRP of the measurement RS, only information corresponding to a single PCI may be included in a single report instance. Therefore, by comparing the best beam quality values per PCI, {L1-RSRP and RS ID} pairs corresponding to a total of 4 PCIs may be reported.

The above method may be indicated by the BS through an RRC configuration or MAC-CE. Alternatively, the UE may select and configure the report quantity and include the corresponding information in the report contents.

### Proposal 1-2

A solution is proposed to address the issue of fluctuation in the PCI subset for each report instance in Proposal 1.
Option 1) Configuring an offset for the quality values of measurement RSs corresponding to each PCI subset

In this case, the same or different offset may be configured per beam and/or per PCI.

Option 2) When configuring the PCI subset based on the quality values of preconfigured measurement RSs, the PCI subset may be configured based on multiple instances (e.g., 5 times) other than a single instance, and applied to subsequent RS measurement.

Regarding the method for configuring the PCI subset in Proposal 1, if the PCI included in the report differs for each beam reporting instance, UE-initiated ICBM beam reporting may be performed frequently. Therefore, as a method of reducing signaling overhead caused by UE-initiated beam reporting while also minimizing fluctuation in the PCI subset, PCIs may be selected based on quality values over multiple instances.

Example) PCI subsets corresponding to three instances are assumed to be as follows: first instance = {PCI#0, PCI#1}, second instance = {PCI#1, PCI#2, PCI#3}, and third instance = {PCI#1, PCI#3, PCI#4}.

As an example, PCI#1 and PCI#3, which appear most frequently across the three instances, may be configured as the PCI subset, or the PCI subset may include PCI(s) that appear more than a specific number of times (n times).

As another example, the PCI subset may be configured to include all PCIs that appear across the three instances.

The number of instances to be considered, [X] and/or the value of n for PCI selection may be configured via RRC.

In addition to Proposals 1, 1-1, and 1-2, the following may be considered. When the UE selects and reports the optimal M TRPs/PCIs as in Option 2 of Proposal 1, the reporting payload may vary depending on the number of PCIs selected by the UE or the number of beams reported per PCI. As one method therefor, as in Proposal 1-2, the payload size may be configured not to vary based on [the number of reported PCIs, A] and [the number of beams reported per PCI, B] (e.g., A × B = Kₘₐₓ or specific constant). However, in this case, as the number of PCIs increases, the number of beams reported per PCI decreases, which may lead to a trade-off in terms of the PCI subset configuration or the reliability of the beam quality for a specific PCI.

Therefore, a method in which the UE dynamically configures/indicates the values of M and N, and the BS is allowed to perform decoding by considering the increase in payload size may be needed.

### Proposal 2

Proposed is a method for configuring an ICBM beam report quantity in consideration of selection of up to M PCIs and the number of beams per PCI.
Option 1) A two-part encoding method for enabling a variable beam report payload size
   1) The following one or more pieces of information may be included as part 1 report contents:
      - The number of PCIs reflected in the report m (≤ M)
      - The number of beams (applied per PCI or commonly to all PCIs)
      - A TA measurement related indicator (applied per PCI or commonly to all PCIs)
   2) Part 2 report contents follow part 1 information.
Option 2) Reporting a fixed payload size based on a reduced payload size compared to conventional ICBM.

Proposed is a method in which the number of PCIs is fixed to M, and the PCIs are ordered based on a 'specific criterion' to differentiate the number of beam reports per PCI.

Example) For M = 4, it is assumed that the PCIs are sorted in the following order: PCI 1/2/3/4 based on a specific criterion, and N = 4. In this case, the following report quantity configuration method may be considered.
- PCI1 and corresponding N {beam quality value, RS ID} pairs
- PCI2 and corresponding N-1 {beam quality value, RS ID} pairs
- PCI3 and corresponding N-2 {beam quality value, RS ID} pairs
- PCI4 and corresponding N-3 {beam quality value, RS ID} pairs

Here, the 'specific criterion' may be the best and/or average beam quality value of each PCI or, in the case of PCI selection based on multiple instances as in Proposal 1-2, the number of times the corresponding PCI is included across multiple instances.

In the case of Option 1 of Proposal 2, a two-part encoding method may be used to provide flexibility in PCI selection and the number of beams per PCI. Since the BS may determine the payload size of subsequent part 2 information by checking part 1 information with the fixed payload, ambiguity during decoding at the BS may be avoided.

In this case, the number of PCIs applied in the report is important as part of the part 1 information because the number of pieces of RSRP information corresponding to beam quality values may increase proportionally with the number of PCIs. In addition, information regarding whether to report the same number of beams for all PCIs or to report a different number of beams per PCI may also be included in the part 1 information.

In addition, as previously proposed in Proposal 1 regarding TA measurement, a 1-bit indicator may be used to indicate that the TAs for all cells corresponding to the PCI subset are measured. However, it is also possible to provide TA measurement status information for specific PCI(s) (e.g., {1, 1, 1, 0} for four PCIs). In this case, RACH triggering is performed for the fourth PCI because the TA measurement status for the fourth PCI is '0' based on the indicator value in a CSC. The RACH triggering is not performed for the other PCIs.

Unlike Option 1, Option 2 does not have a variable payload. However, Option 2 assigns priority based on beam quality information per PCI or the frequency of PCIs that appear across multiple instances, thereby allowing more beams to be reported for PCIs with higher frequency or better beam quality. On the other hand, for PCIs with lower frequency or relatively poorer beam quality, Option 2 may apply a differential beam reporting method by reducing the number of beams reported according to the sorting order.

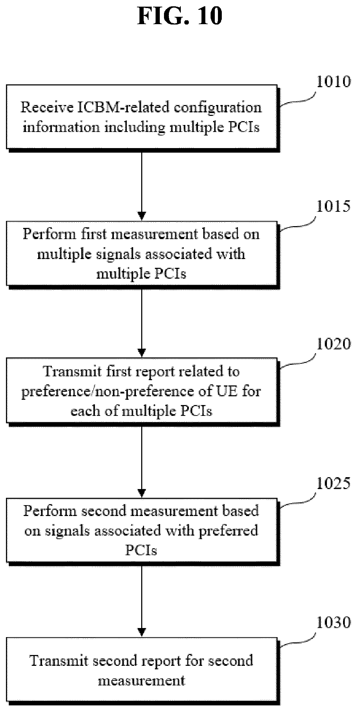

FIG. 10 illustrates a flow of a method performed by a UE according to an embodiment.

Referring to FIG. 10, the UE may receive configuration information including a plurality of PCIs related to ICBM (1010).

The UE may perform first measurement based on a plurality of signals related to the plurality of PCIs (1015).

The UE may transmit a first report related to preference/non-preference of the UE for each of the plurality of PCIs based on the first measurement (1020).

The UE may perform second measurement based on signals for preferred PCIs by excluding non-preferred PCIs among the plurality of PCIs (1025).

Based on that the second measurement satisfies a UE-initiated beam report condition, the UE may transmit a second report for the second measurement (1030).

The second report may be a UE-initiated beam report for the ICBM.

A PCI subset may be configured based on the preferred PCIs of the UE. The PCI subset may be updated based on the second measurement reported through the second report.

The second report may include measurement values of up to N beams for each of the preferred PCIs.

The number of beams for each of the preferred PCIs may be determined differently depending on a preference level of each of the preferred PCIs.

M, which is the number of preferred PCIs, and N may be determined based on higher layer signaling.

M, which is the number of preferred PCIs, and N may be determined by the UE, and the second report may include information about at least one of M and N.

The second report may include information regarding whether TA measurement is performed for each of the preferred PCIs.

The UE-initiated beam report condition may include at least one of: the presence of a PCI having a higher beam quality than a beam quality of a PCI related to a CORESET pool index; and the presence of a PCI having a higher beam quality than a beam quality of a serving cell.

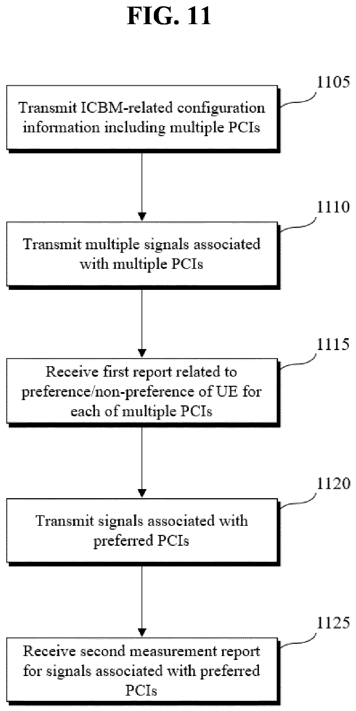

FIG. 11 illustrates a flow of a method performed by at least one network node according to an embodiment. In FIG. 11, the at least one network node may be at least one BS/TRP.

Referring to FIG. 11, the at least one network node may transmit configuration information including a plurality of PCIs related to ICBM to a UE (1105).

The at least one network node may transmit a plurality of signals related to the plurality of PCIs (1110).

The at least one network node may receive a first measurement report related to preference/non-preference of the UE for each of the plurality of PCIs (1115).

The at least one network node may transmit signals for the preferred PCIs to the UE by excluding non-preferred PCIs among the plurality of PCIs (1120).

Based on that a UE-initiated beam report condition is satisfied at the UE, the at least one network node may receive a second measurement report for the signals for the preferred PCIs (1125).

The second measurement report may be a UE-initiated beam report for the ICBM.

A PCI subset may be configured based on the preferred PCIs of the UE. The PCI subset may be updated through the second measurement report.

The second measurement report may include measurement values of up to N beams for each of the preferred PCIs.

The number of beams for each of the preferred PCIs may be determined differently depending on a preference level of each of the preferred PCIs.

M, which is the number of preferred PCIs, and N may be determined based on higher layer signaling.

M, which is the number of preferred PCIs, and N may be determined by the UE, and the second measurement report may include information about at least one of M and N.

The second measurement report may include information regarding whether TA measurement is performed for each of the preferred PCIs.

The UE-initiated beam report condition may include at least one of: the presence of a PCI having a higher beam quality than a beam quality of a PCI related to a CORESET pool index; and the presence of a PCI having a higher beam quality than a beam quality of a serving cell.

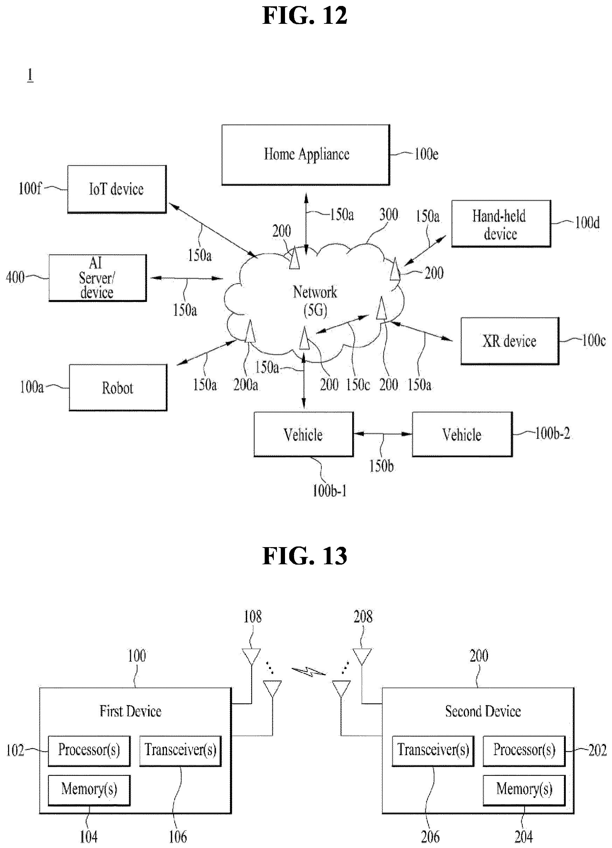

FIG. 12 illustrates a communication system 1 applied to the disclosure.

Referring to FIG. 12, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 13 illustrates wireless devices applicable to the disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

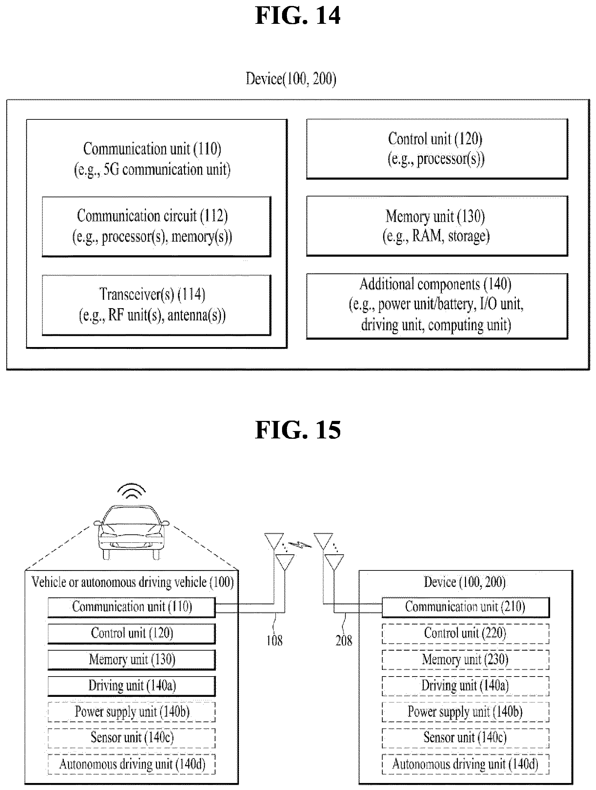

FIG. 14 illustrates another example of a wireless device applied to the disclosure. The wireless device may be implemented in various forms according to a use-case/service (refer to FIG. 12).

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 15 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the disclosure in prescribed forms. And, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The disclosure is applicable to UEs, BSs, or other apparatuses in a wireless mobile communication system.

## Claims

1. A method performed by a user equipment (UE), the method comprising:
receiving configuration information comprising a plurality of physical cell identifiers (PCIs) related to inter-cell beam management (ICBM);
performing first measurement based on a plurality of signals related to the plurality of PCIs;
transmitting a first report related to preference/non-preference of the UE for each of the plurality of PCIs based on the first measurement;
performing second measurement based on signals for preferred PCIs by excluding non-preferred PCIs among the plurality of PCIs; and
based on that the second measurement satisfies a UE-initiated beam report condition, transmitting a second report for the second measurement.

2. The method of claim 1, wherein the second report is a UE-initiated beam report for the ICBM.

3. The method of claim 1, wherein a PCI subset is configured based on the preferred PCIs of the UE, and
wherein the PCI subset is updated based on the second measurement reported through the second report.

4. The method of claim 1, wherein the second report comprises measurement values of up to N beams for each of the preferred PCIs.

5. The method of claim 4, wherein a number of beams for each of the preferred PCIs is determined differently depending on a preference level of each of the preferred PCIs.

6. The method of claim 4, wherein M, which is a number of the preferred PCIs, and N are determined based on higher layer signaling.

7. The method of claim 4, wherein M, which is a number of the preferred PCIs, and N are determined by the UE, and
wherein the second report comprises information about at least one of M and N.

8. The method of claim 1, wherein the second report comprises information regarding whether timing advance (TA) measurement is performed for each of the preferred PCIs.

9. The method of claim 1, wherein the UE-initiated beam report condition comprises at least one of:
presence of a PCI having a higher beam quality than a beam quality of a PCI related to a specific control resource set (CORESET) pool index; and
presence of a PCI having a higher beam quality than a beam quality of a serving cell.

10. A non-transitory computer-readable recording medium having recorded thereon a program for executing the method of claim 1.

11. A device comprising:
a memory configured to store instructions; and
a processor configured to perform operations by executing the instructions,
wherein the operations of the processor comprise:
receiving configuration information comprising a plurality of physical cell identifiers (PCIs) related to inter-cell beam management (ICBM);
performing first measurement based on a plurality of signals related to the plurality of PCIs;
transmitting a first report related to preference/non-preference of the device for each of the plurality of PCIs based on the first measurement;
performing second measurement based on signals for preferred PCIs by excluding non-preferred PCIs among the plurality of PCIs; and
based on that the second measurement satisfies a device-initiated beam report condition, transmitting a second report for the second measurement.

12. The device of claim 11, further comprising a transceiver configured to transmit or receive wireless signals under control of the processor,
wherein the device is a user equipment (UE) in a wireless communication system.

13. The device of claim 11, wherein the device is a processing device configured to control a user equipment (UE) in a wireless communication system.

14. A method performed by at least one network node, the method comprising:
transmitting configuration information comprising a plurality of physical cell identifiers (PCIs) related to inter-cell beam management (ICBM) to a user equipment (UE);
transmitting a plurality of signals related to the plurality of PCIs;
receiving a first measurement report related to preference/non-preference of the UE for each of the plurality of PCIs;
transmitting signals for preferred PCIs to the UE by excluding non-preferred PCIs among the plurality of PCIs; and
based on that a UE-initiated beam report condition is satisfied at the UE, receiving a second measurement report for the signals for the preferred PCIs.

15. At least one network node comprising:
at least one memory configured to store instructions; and
at least one processor configured to perform operations by executing the instructions,
wherein the operations of the at least one processor comprise:
transmitting configuration information comprising a plurality of physical cell identifiers (PCIs) related to inter-cell beam management (ICBM) to a user equipment (UE);
transmitting a plurality of signals related to the plurality of PCIs;
receiving a first measurement report related to preference/non-preference of the UE for each of the plurality of PCIs;
transmitting signals for preferred PCIs to the UE by excluding non-preferred PCIs among the plurality of PCIs; and
based on that a UE-initiated beam report condition is satisfied at the UE, receiving a second measurement report for the signals for the preferred PCIs.
